# FASCICULE DE BREVET EUROPEEN

(11) **EP 1 236 554 B1**
(45) Date de publication et mention de la délivrance du brevet: **10.12.2003**
(21) Numéro de dépôt: 02290501.2
(22) Date de dépôt: 01.03.2002
(51) Int. Cl.: B29C 33/04, B29C 35/02, B29C 70/54

(54) **Procédé de fabrication de pièces en matériaux composites**
Verfahren zur Herstellung von Teilen aus Verbundwerkstoffen
Method for manufaturing parts from composite materials

(30) Priorité: 01.03.2001 FR 0102780
(43) Date de publication de la demande: 04.09.2002
(73) Titulaire: Etat Francais représenté par le Délégue Général pour l'Armement, 94114 Arcueil Cedex (FR)
(72) Inventeur: Arnaud, Jean-Pierre, 50470 La Glacerie (FR); Hautot, Gilles, 50470 La Glacerie (FR); Davoust Lucien, 83500 La Seine Sur Mer (FR)
(74) Mandataire: Jacobson, Claude

(56) Documents cités:
- FR-A- 2 555 501
- US-A- 3 043 017
- US-A- 6 112 804
- US-A- 6 149 844

## Description

La présente invention se rapporte à un procédé de fabrication de pièces réalisées en matériaux composites soit en pré-imprégnés, soit par voie humide nécessitant une réticulation à chaud. L'invention s'applique par exemple au domaine de la construction navale pour la réalisation de coques ou de dômes de grandes dimensions du type de ceux utilisés pour la fabrication de sous-marins.

La solution classique connue et utilisée actuellement consiste à réaliser les pièces en composite par moulage dans des outillages traditionnels comme décrit dans US-A-3 043 017 et le préambule de la revendication 1. Dans un premier temps, un moule métallique femelle est usiné aux dimensions de la pièce en composite souhaitée. Puis on met en place les différents composants de la pièce à réaliser contre la surface intérieure de ce moule de mise en forme. Enfin, l'ensemble constitué par le moule métallique et le garnissage est disposé dans un four ou un autoclave à une température suffisante pour réaliser la polymérisation entre les différents composants.

Une telle fabrication présente cependant de nombreux inconvénients :
- La réalisation du moule est coûteuse. Pour supporter une température de l'ordre de 150°C lorsque l'ensemble moule garniture est dans la phase de cuisson dans un four ou un autoclave, il est nécessaire d'utiliser un moule métallique usiné intégrant un système de refroidissement pour pallier aux dilatations des éléments.
- De plus, l'utilisation de ce genre de procédés est quasiment exclusivement réservée pour des pièces de faibles dimensions. Pour des pièces plus importantes, la taille du four de chauffage correspondant est prohibitive. Par ailleurs, plus les dimensions de la pièce sont importantes, plus il est difficile d'assurer une homogénéité de la température sur toute sa surface. C'est une des raisons pour lesquelles il est très délicat voire impossible de réaliser des pièces de grandes dimensions dans de tels fours ou autoclaves, sans que le coût ne soit autre qu'extrêmement important.

Pour répondre à ces problèmes, d'autres procédés ont également déjà été présentés. Le brevet FR 2.574.341 traite d'une invention applicable dans la réalisation de coques de navires ayant également de grandes dimensions. Il propose l'utilisation d'un moule en plusieurs parties, avec des couches électriquement chauffantes placées directement au contact de la surface extérieure et de la surface intérieure de la pièce à réaliser. Ce procédé, même s'il peut être adapté à la fabrication de pièces de taille importante, ne peut cependant pas être appliqué lorsqu'il est nécessaire de réaliser des pièces avec des caractéristiques techniques précises, telles que les dimensions ou les caractéristiques électromagnétiques propres par exemple à un dôme de sous-marin. L'utilisation d'un moule en plusieurs parties ne permet pas d'avoir une précision importante sur les dimensions de la pièce à réaliser. De plus, il semble difficile d'effectuer un positionnement précis du système de couches chauffantes pour assurer une bonne répartition de température sur l'ensemble de la pièce, et garantir ainsi une polymérisation homogène de cette dernière, sans formation de bulle d'air.

Le but de la présente invention est de remédier aux inconvénients ci-dessus en proposant un procédé de fabrication de pièces composites, notamment de grandes dimensions, à moindre coût.

Un autre but de l'invention est de permettre la réalisation de pièces à l'aide d'un procédé peu coûteux, tout en respectant des caractéristiques physiques précises tels que les dimensions, la perméabilité électromagnétique ou encore le niveau acoustique le l'ensemble.

Pour ce faire, l'invention a pour objet un procédé de fabrication de pièce en matériaux composites du type coque apte à être positionnée dans un moule et destinée à être cuite à l'aide de moyens de chauffage dans une étuve. Ce procédé est caractérisé en ce que l'étuve est notamment constituée par le moule.

Préférentiellement, le procédé selon l'invention est réalisé à l'aide d'un moule comprenant une couche d'isolant recouverte de part et d'autre par respectivement une peau intérieure et une peau extérieure. La peau intérieure de ce moule assure alors le contact avec la coque à cuire.

Les peaux intérieure et extérieure du moule peuvent être réalisées en matériaux du type matériaux composites stratifiés et la couche d'isolant en matériaux du type polyméthacrylate imide.

Préférentiellement, les moyens de chauffage comprennent un bouchon de chauffe muni de grilles assurant la distribution de l'air chaud produit par un générateur d'air chaud communiquant avec le bouchon de chauffe. Ils comprennent également une cheminée munie d'une hotte communiquant avec ce même bouchon de chauffe pour aspirer l'air refroidi dans le fond du moule. Ces moyens de chauffage peuvent également constituer la partie complémentaire du moule pour la réalisation de l'étuve.

Le procédé objet de l'invention présente les avantages suivants.

Le procédé utilise des moyens de chauffage du type générateur d'air chaud, cet air chaud n'étant en contact qu'avec une partie de la coque à cuire, ne nécessitant donc plus de four ni d'autoclave. De plus, avec un tel procédé n'offrant plus de contact direct entre la chaleur créée et le moule, l'utilisation de systèmes de refroidissement du moule n'est plus obligatoire car les déformations dues aux hautes températures du four dans les procédés de l'art antérieur ont été considérablement amoindries. C'est donc un des avantages principaux de l'invention que de présenter un procédé dans lequel l'étuve servant à chauffer la coque est notamment constituée par le moule lui-même.

Un autre avantage de l'invention est la limitation des coûts des moyens de production utilisés. Le moule femelle constitue l'étuve pour la réalisation de la pièce. Il remplit à la fois les fonctions d'outillage et les fonctions de moyen de cuisson. Il n'est donc pas non plus nécessaire de disposer d'un four ou d'un autoclave. De plus, selon un mode particulier de réalisation de l'invention, ce moule n'est pas usiné dans une pièce métallique, mais est réalisé en composite, réduisant alors davantage les problèmes dus à la dilatation du moule sous l'effet de la chaleur.

Le procédé selon l'invention propose avantageusement une réalisation précise des dimensions de la pièce. Le moule femelle n'est pas constitué d'un assemblage de différents moules ; il est constitué d'un seul élément et est usiné aux dimensions de la pièce à réaliser.

Avantageusement, il existe une possibilité de piloter précisément les cycles de température. Le moule étuve est relié à une centrale de conditionnement qui permet de refroidir l'air ambiant lors de la mise en place des éléments pré-imprégnés, et ensuite d'assurer un cycle de chauffage jusqu'à 150°C pour permettre leur réticulation.

D'autres caractéristiques et avantages de l'invention apparaîtront dans la description détaillée, non limitative, ci-dessous.

Cette description sera faite en regard des dessins annexés parmi lesquels :
- la figure 1 représente une coupe transversale partielle schématique d'une pièce en cours de réalisation selon le procédé objet de l'invention lors de l'étape de chauffage de la pièce à cuire ;
- la figure 2 est une coupe partielle du détail A de la figure 1 représentant un moule associé à la pièce en matériaux composites destinée à être cuite.

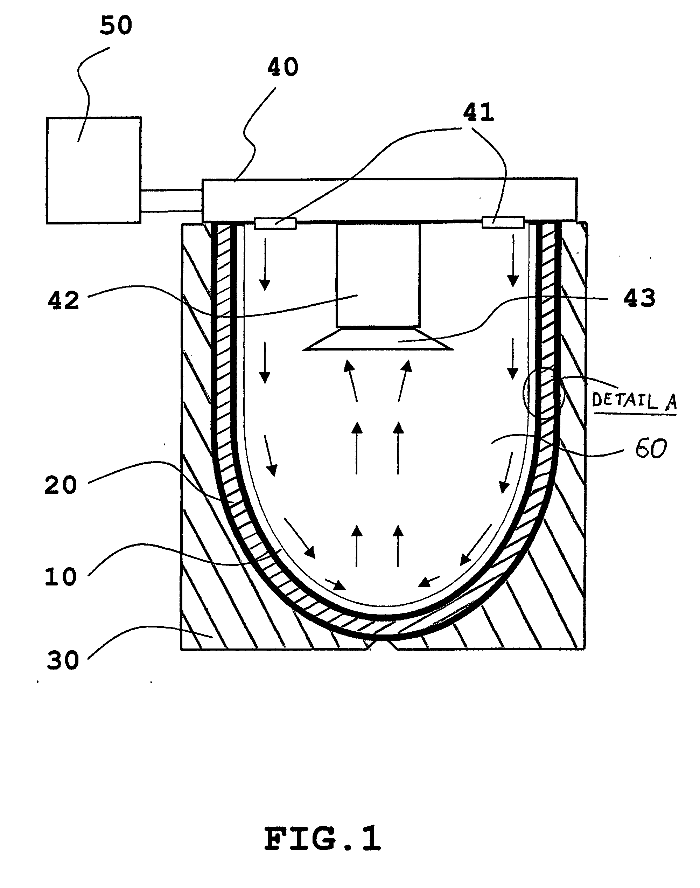

En référence à la figure 1, l'invention a pour objet un procédé de fabrication de pièce en matériaux composites du type coque 10. Cette coque comprend une face intérieure 10a et une face extérieure 10b, la face extérieure 10b étant destinée à être en contact avec un moule 20 lorsque la pièce à cuire 10 a été placée à l'intérieur de ce moule. Une fois placée, l'étape suivante du procédé selon l'invention consiste en la cuisson de la coque 10 à l'intérieur d'une étuve 60, par l'intermédiaire de moyens de chauffage du type générant de l'air chaud. Cependant, cet air chaud n'est pas en contact direct avec l'ensemble constitué du moule et de la coque, mais uniquement avec la face intérieure 10a de cette coque 10. Ceci va alors être réalisé en prenant le moule 20 comme constituant une partie de l'étuve 60 où est destinée à être cuite la coque 10.

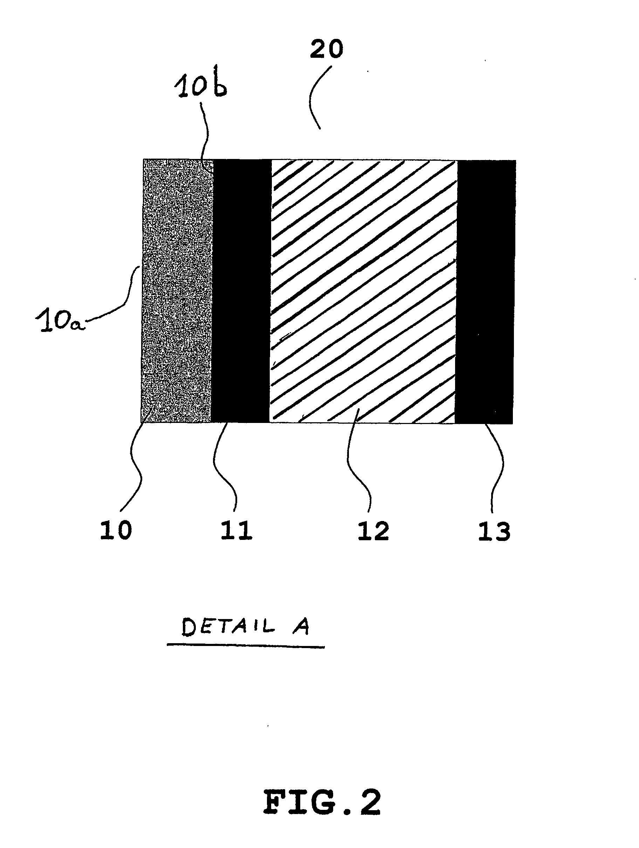

Toujours en référence à la figure 1, on se propose de réaliser un dôme de sous-marin identifié par la pièce 10. Ce dôme a pour dimensions environ 8.9 mètres de diamètre et une hauteur d'environ 6.75 mètres. Il s'agit donc d'une pièce de grande dimension, des pièces de dimensions plus petites pouvant également bien entendu être fabriquées à l'aide du procédé selon l'invention. Cette coque 10 est composée de différentes couches de matériaux composites pré-imprégnés. Elle est fabriquée à l'aide d'un outillage spécifique constitué du moule étuve femelle 20. Ce moule 20 a été préalablement réalisé en matériaux composites, aux cotes de la pièce finale. Il est à noter que ce dernier peut tout aussi bien se présenter sous une forme classique de moule connu de l'art antérieur, du type moule en acier. Dans un mode préférentiel de réalisation, il est constitué, comme présenté sur la figure 2, d'une peau intérieure 11, dite peau chaude, en contact avec la pièce à réaliser 10. Cette peau chaude est séparée de la peau extérieure 13, dite peau froide, par une âme 12 en mousse assurant l'isolation entre les deux peaux. Cette réalisation permet entre autre de diminuer le risque de dilatation du moule par rapport à celui existant sur un moule en acier, mais participe également à la fourniture d'une certaine homogénéité dans la répartition de chaleur générée par les moyens de chauffage 40,41,42,43,50.

L'ensemble formé par la coque 10 et le moule 20 est soutenu sur le sol par un bâti support 30.

Dans cette réalisation préférentielle telle que représentée sur la figure 1, le moule 20, constituant une partie de l'étuve dans laquelle la coque 10 va être cuite, a une forme sensiblement comparable à une demi ellipsoïde de révolution, à l'intérieur de laquelle est destinée à se positionner la coque 10. Sur la partie supérieure de ce moule 20, nous pouvons trouver la première partie 40,41,42,43 des moyens de chauffage 40,41,42,43,50 qui servira également de partie complémentaire au moule 20 pour la réalisation de l'étuve 60 en venant fermer le volume créé par ce moule 20.

Nous disposons tout d'abord d'un bouchon de chauffe 40, ou couvercle du moule étuve 20, constitué d'un caisson métallique entièrement isolé. Il comporte en partie basse des grilles 41, assurant la distribution périphérique de l'air chaud représenté sur la figure 1 par des flèches symbolisant son mouvement à l'intérieur du volume créé par la géométrie spécifique du moule 10 et donc de l'étuve 60. Ces grilles 41 équipées d'ailettes permettent le réglage de la vitesse de passage à chaque bouche de sortie, assurant ainsi une homogénéité accrue de la chaleur au contact de la coque 10 à cuire.

Le bouchon de chauffe 40 est également équipé dans sa partie centrale d'une bouche d'aspiration de l'air refroidi en fond de moule. Cette bouche est constituée d'une cheminée 42 et d'une hotte 43 canalisant l'air vers le bouchon.

Enfin, la seconde partie constituant les moyens de chauffage comprend un générateur d'air chaud 50 ou encore appelée centrale de conditionnement. Ce générateur permet lors des phases de mise en place des composites pré-imprégnés, de pulser de l'air et de maintenir une température suffisamment basse pour permettre leur manipulation. Il assure ensuite en phase de réticulation, la pulsion d'air chaud et le recyclage de l'air refroidi après son aspiration effectuée par la cheminée 42 et la hotte 43.

Bien que cela ne soit pas représenté sur la figure 1, les moyens de chauffage 40,41,42,43,50 sont aussi composés d'un système permettant le pilotage de l'émission d'air ainsi que le contrôle de sa température. Il intègre enfin un système de traçabilité assurant l'enregistrement des cycles de cuisson.

Le processus de fabrication d'une pièce du type dôme de sous-marin comprend quatre phases principales qui sont les suivantes.
- La réalisation d'un moule brut ;
- La réalisation d'un bâti support et la fixation de ce dernier avec le moule brut ;
- La finition du moule à la cote définitive ;
- Le moulage de la coque.

La première phase de ce procédé selon un mode de réalisation préférentiel de l'invention consiste à réaliser un moule brut 20 qui est destiné à servir à la fabrication de la pièce finale 10. Pour se faire, on réalise les étapes suivantes.
- La fabrication à moindre coût et sans recherche de précision d'un mannequin mâle de forme géométrique grossière. Sa réalisation s'effectue par blasons contreplaqués et lattages sapin ;
- La mise en forme et le positionnement sur ce mannequin, à l'aide d'un film adhésif double face, des plaques fines en composite équipées d'un film de délaminage sur les deux faces ;
- La stratification de cet assemblage de plaques par résine d'outillage époxy et verre. Cet assemblage constitue alors la peau chaude 21 du futur moule 20 ;
- La dépose sur cette peau chaude du matériau isolant 22. Ce matériau peut être de type mousse polyméthacrylate imide, de balsa ou de tout autre matériau similaire ;
- La stratification de la peau froide 23 du moule sur le matériau isolant, par une méthode traditionnelle du type voie humide mécanisée à l'aide d'une imprégnatrice.

La deuxième phase consiste à réaliser un bâti support, puis à le solidariser au moule avant de retourner cet ensemble une fois constitué. Pour se faire, on effectue les étapes suivantes.
- La réalisation parallèlement à celle de la première phase, d'un bâti support 30 du moule 20, constitué d'éléments sandwich verre/époxy avec une âme en balsa ;
- Le positionnement de ce bâti sur le moule brut et la fixation à ce dernier par stratification de bandes composites en intégrant également des cornières composites verre/époxy sur chaque intersection pour permettre une reprise des efforts ;
- Le démontage par l'intérieur du mannequin en bois ;
- Le retournement de l'ensemble constitué par le moule brut 20 et bâti support 30.

La troisième phase doit permettre de disposer une fois sa réalisation terminée, d'un moule usiné aux cotes finales de la pièce à effectuer. Les opérations suivantes sont à entreprendre.
- La préfabrication de plaques de matériau usinable à l'aide d'une matrice époxy chargée de poudre d'aluminium. Ces plaques ont pour dimensions environ 1m x 0.5m, et une épaisseur variant de 30 à 40 mm ;
- La pose des plaques de matériau usinable préfabriquées, sur la peau chaude du moule, à l'aide d'un adhésif d'accrochage. Le film de délaminage présent sur cette peau chaude est préalablement enlevé ;
- Le montage des moyens de chauffage 40,41,42,43,50 tels que présentés en figure 1 en reposant sur la partie supérieure du moule 20, et la stabilisation du matériau posé sur la peau chaude par un cycle de cuisson à 150°C ;
- L'usinage à la cote finale, à plus ou moins 2mm, de l'intérieur du moule, par une unité d'usinage (du type tour), qui vient se mettre à la place des moyens de chauffage ;
- Après contrôle photogramétrique de l'usinage, la surface intérieure du moule reçoit l'application d'un produit de finition du type TOP COAT, qui est recuit à 150°C à l'aide du dispositif de chauffe, et enfin glacé à l'aide d'une crème de lustrage, pour obtenir une finition parfaite.

A l'issue de cette troisième phase, on dispose d'un moule définitif, aux dimensions précises de la coque à réaliser. La quatrième et dernière phase regroupe donc les différentes étapes nécessaires à la réalisation de la pièce en elle-même, que l'on peut décrire de la manière suivante.
- L'application des couches de matériaux composites pré-imprégnés. Lors de cette mise en oeuvre, le dispositif de chauffe peut être utilisé pour maintenir une température idéale de manipulation des pré-imprégnés ;
- La réticulation des matériaux composites en réalisant des cycles de chauffage à une température de l'ordre de 150°C ;
- Le démoulage de la pièce après refroidissement ;

Des variantes de réalisation du procédé sont envisageables pour la fabrication de toute autre pièce composite, de petite ou de grande dimension et de toute autre forme. Les pièces n'ont aucune obligation de se présenter sous une forme de révolution, la condition essentielle étant d'adapter le système de flux d'air en soufflage et en aspiration, à l'intérieur du moule étuve, en fonction des différentes formes spécifiques à chaque coque.

## Revendications

1. Procédé de fabrication de pièce en matériaux composites du type coque (10) apte à être positionnée dans un moule (20) et destinée à être cuite à l'aide de moyens de chauffage (40, 41, 42, 43, 50) dans une étuve (60) constituée par le moule (20), ***caractérisé en ce que*** le moule (10) comprend une couche d'isolant thermique (12) recouverte de part et d'autre par respectivement une peau intérieure (11) et une peau extérieure (13), la peau intérieure (11) assurant le contact avec la face extérieure (10b) de la coque à cuire (10);

2. Procédé de fabrication de pièce en matériaux composites selon la revendication 1, ***caractérisé en ce que*** la peau intérieure (11) et la peau extérieure (13) du moule (10) sont réalisées en matériaux du type matériaux composites stratifiés, et que la couche d'isolant (12) est réalisée en matériaux du type polyméthacrylate imide ;

3. Procédé de fabrication de pièce en matériaux composites selon l'une quelconque des revendications précédentes, ***caractérisé en ce que*** les moyens de chauffage (40,41,42,43,50) comprennent un bouchon de chauffe (40) muni de grilles (41) assurant la distribution de l'air chaud produit par un générateur d'air chaud (50) communiquant avec le bouchon de chauffe (40), ainsi qu'une cheminée (42) munie d'une hotte (43) et communiquant avec le bouchon de chauffe (40) pour aspirer l'air refroidi dans le fond du moule (20) ;

4. Procédé de fabrication de pièce en matériaux composites selon l'une quelconque des revendications précédentes, ***caractérisé en ce que*** les moyens de chauffage (40,41,42,43,50) constituent la partie complémentaire du moule (20) pour la réalisation de l'étuve (60) ;

5. Procédé de fabrication de pièce en matériaux composites selon l'une quelconque des revendications précédentes, ***caractérisé en ce que*** le moule (20) est maintenu par un bâti support (30) constitué notamment par des éléments sandwichs du type verre-époxy avec une âme réalisée en balsa ;

6. Procédé de fabrication de pièce en matériaux composites selon l'une quelconque des revendications précédentes, ***caractérisé en ce que*** les moyens de chauffage (40,41,42,43,50) permettent la mise en oeuvre des matériaux constituant la coque (10) dans des conditions nominales optimales ;

7. Procédé de fabrication de pièce en matériaux composites selon l'une quelconque des revendications précédentes, ***caractérisé en ce que*** le procédé est réalisé selon les étapes suivantes :
a) le réalisation d'un moule brut ;
b) la réalisation d'un bâti support du moule et la fixation de ce dernier sur le moule ;
c) la finition du moule à la cote définitive ;
d) le moulage de la coque.

## Claims

1. Process for manufacturing a part made of composite materials of the shell type (10) capable of being positioned inside a mould (20) and designed to be stoved with the aid of heating means (40, 41, 42, 43, 50) in an oven (60) consisting of the mould (20), **characterized in that** the mould (10) comprises a layer of thermal insulation (12) covered either side by an inner skin (11) and an outer skin (13) respectively, the inner skin (11) ensuring contact with the outer face (10b) of the shell to be cured (10).

2. Process for manufacturing a part made of composite materials according to claim 1, **characterized in that** the inner skin (11) and the outer skin (13) of the mould (10) are made of materials of the laminated composite type, and **in that** the insulating layer (12) is made of materials of the polymethacrylate-imide type.

3. Process for manufacturing a part made of composite materials according to any one of the preceding claims, **characterized in that** the heating means (40, 41, 42, 43, 50) comprise a heating plug (40) provided with meshes (41) ensuring the distribution of hot air produced by a hot air generator (50) communicating with the heating plug (40), as well as a chimney (42) provided with a hood (43) and communicating with the heating plug (40) so as to extract cooled air from the bottom of the mould (20).

4. Process for manufacturing a part made of composite materials according to any one of the preceding claims, **characterized in that** the heating means (40, 41, 42, 43, 50) constitute the complementary part of the mould (20) to form the oven (60).

5. Process for manufacturing a part made of composite materials according to any one of the preceding claims, **characterized in that** the mould (20) is held by a supporting frame (30) consisting in particular of sandwich elements of the glass-epoxy type with a core made of balsa.

6. Process for manufacturing a part made of composite materials according to any one of the preceding claims, **characterized in that** the heating means (40, 41, 42, 43, 50) enable the materials constituting the shell (10) to be applied under nominally optimum conditions.

7. Process for manufacturing a part made of composite materials according to any one of the preceding claims, **characterized in that** the process is carried out in the following steps :
a) constructing a rough mould;
b) constructing a frame for supporting the mould and attaching the latter to the mould;
c) finishing the mould to the final dimensions;
d) moulding the shell.

## Patentansprüche

1. Verfahren zur Herstellung eines schalenförmigen Werkstücks (10) aus Verbundmaterialien, das in einer Form (20) angeordnet werden kann und mit Hilfe von Heizmitteln (40, 41, 42, 43, 50) in einem durch die Form (20) gebildeten Trockenofen (60) ausgehärtet werden soll, **dadurch gekennzeichnet, daß** die Form (10) eine Wärmeisolationsschicht (12) aufweist, die auf beiden Seiten mit einer inneren Haut (11) bzw. einer äußeren Haut (13) bedeckt ist, wobei die innere Haut (11) den Kontakt mit der Außenfläche (10b) der auszuhärtenden Schale (10) sicherstellt.

2. Verfahren zur Herstellung eines Werkstücks aus Verbundmaterialien nach Anspruch 1, **dadurch gekennzeichnet, daß** die innere Haut (11) und die äußere Haut (13) der Form (10) aus Schichtverbundmaterialien bestehen und daß die Isolationsschicht (12) aus Polymethacrylimid-Materialien besteht.

3. Verfahren zur Herstellung eines Werkstücks aus Verbundmaterialien nach einem der vorangehenden Ansprüche, **dadurch gekennzeichnet, daß** die Heizmittel (40, 41, 42, 43, 50) einen Heizdeckel (40) umfassen, der mit Gittern (41) ausgestattet ist, die die Verteilung der heißen Luft gewährleisten, die von einem Heißluftgenerator (50) erzeugt wird, welcher mit dem Heizdeckel (40) in Verbindung steht, sowie einen Kamin (42), der mit einer Abzugshaube (43) ausgestattet ist und mit dem Heizdeckel (40) in Verbindung steht, um die abgekühlte Luft vom Boden der Form (20) abzusaugen.

4. Verfahren zur Herstellung eines Werkstücks aus Verbundmaterialien nach einem der vorangehenden Ansprüche, **dadurch gekennzeichnet, daß** die Heizmittel (40, 41, 42, 43, 50) den komplementären Teil der Form (20) zur Bildung des Trockenofens (60) bilden.

5. Verfahren zur Herstellung eines Werkstücks aus Verbundmaterialien nach einem der vorangehenden Ansprüche, **dadurch gekennzeichnet, daß** die Form (20) durch ein Traggestell (30) gehalten wird, welches insbesondere aus Sandwich-Elementen aus glasfaserverstärktem Epoxyharz mit einem aus Balsaholz bestehenden Kern besteht.

6. Verfahren zur Herstellung eines Werkstücks aus Verbundmaterialien nach einem der vorangehenden Ansprüche, **dadurch gekennzeichnet, daß** die Heizmittel (40, 41, 42, 43, 50) den Einsatz der die Schale (10) bildenden Materialien unter optimalen Nominalbedingungen ermöglichen.

7. Verfahren zur Herstellung eines Werkstücks aus Verbundmaterialien nach einem der vorangehenden Ansprüche, **dadurch gekennzeichnet, daß** das Verfahren gemäß den folgenden Schritten durchgeführt wird:
a) Herstellung einer rohen Form;
b) Herstellung eines Traggestells für die Form und deren Befestigung an der Form;
c) Endbearbeitung der Form auf das endgültige Maß;
d) Formen der Schale.
